# FASCICULE DE BREVET EUROPEEN

(11) **EP 1 533 059 B1**
(45) Date de publication et mention de la délivrance du brevet: **11.02.2009**
(21) Numéro de dépôt: 03405837.0
(22) Date de dépôt: 24.11.2003
(51) Int. Cl.: B23B 31/40, B23B 31/02

(54) **Dispositif élastique pour appareil de maintien élastique d'une pièce**
Elastische Einrichtung für elastisches Stützgerät für ein Werkstück
Elastic device for elastic supporting apparatus for a workpiece

(43) Date de publication de la demande: 25.05.2005
(73) Titulaire: Affolter Electronique SA, 2735 Malleray-Bévilard (CH)
(72) Inventeur: Affolter, Marc-Alain, 2735 Malleray-Bévilard (CH)
(74) Mandataire: BOVARD AG

(56) Documents cités:
- EP-A- 0 327 661
- DE-B- 1 280 637
- DE-C- 925 108
- US-A- 2 803 159
- US-A- 3 299 753

## Description

L'invention se rapporte à un dispositif élastique tel que défini dans le préambule de la revendication 1, et destiné à être incorporé à un appareil de maintien élastique énergique d'une pièce pendant la réalisation d'au moins une opération d'usinage sur cette pièce, ladite pièce comportant un axe de révolution et au moins deux faces opposées, sensiblement orthogonales à cet axe de révolution, l'appareil réalisant à la fois un centrage de la pièce selon son axe de révolution et un maintien énergique de cette pièce par pincement entre ses faces opposées. Un tel dispositif est connu du document DE-A-1 280 637.

Au plan de la fonction, l'appareil de maintien s'apparente à un montage d'usinage entre pointe et contre-pointe qui, connu sous le nom de montage en l'air, est fréquemment utilisé dans le domaine de l'usinage de pièces comportant un axe de révolution.

L'appareil selon l'invention est destiné à équiper une machine d'usinage qui permet d'assurer une reprise d'usinage sur des pièces du type précité, c'est-à-dire, précisément la réalisation d'une opération d'usinage à la périphérie de la pièce, par exemple la réalisation d'une denture à la périphérie de cette pièce.

En effet, fréquemment, une pièce mécanique comprend plusieurs surfaces dont les positions sont définies par rapport à au moins un axe fictif et/ou une surface de référence de cette pièce.

La réalisation d'une telle pièce exige généralement une pluralité d'opérations, telles des opérations d'usinage des surfaces, lesquelles opérations sont effectuées successivement.

Classiquement, toutes les opérations d'usinage ne peuvent être réalisées sur une seule et même machine, notamment en raison de la complexité des mécanismes que cette machine devrait comprendre.

Dans le processus de réalisation d'une telle pièce, certaines surfaces de la pièce sont donc réalisées avant d'autres surfaces et les surfaces préalablement réalisées sont ensuite utilisées pour constituer des surfaces d'appui et de maintien de la pièce lors d'un usinage ultérieur.

L'invention intéresse particulièrement, mais non exclusivement, la réalisation d'au moins un usinage sur une pièce d'horlogerie comportant un axe de révolution et comprenant :
- une première partie constitutive, telle une roue, dont le volume est déterminé par une face périphérique d'enveloppe située radialement à une certaine distance de l'axe de révolution et deux faces opposées, dont une première et une seconde, qui sont sécantes à l'axe de révolution, et
- au moins une seconde partie fonctionnelle constitutive qui, coaxiale à ladite première partie constitutive, présente une troisième face qui s'étend substantiellement selon l'axe de révolution et détermine au moins l'une des parties que sont,
   . un arbre qui fait saillie sur au moins l'une des faces opposées, et
   . un alésage qui traverse au moins partiellement la pièce entre ses deux faces opposées.

Un appareil classique de maintien élastique comprend un premier ensemble fonctionnel et un second ensemble fonctionnel qui, sur la machine, sont alignés et disposés en opposition pour :
- appliquer d'une action énergique contre chacune desdites première et seconde faces de la première partie constitutive de la pièce, de manière à maintenir la pièce par pincement entre ces faces opposées,
- assurer le centrage de la pièce sur l'axe de révolution,
- guider et entraîner cette pièce en rotation selon l'axe de révolution,
ces ensembles fonctionnels étant chacun destiné à être associé à un premier et un second moyen de guidage en rotation prévus sur la machine d'usinage.

Le premier ensemble fonctionnel porte une première surface d'appui contre celle dite première des deux faces opposées de la première partie constitutive de la pièce.

Le second ensemble fonctionnel porte une seconde surface d'appui contre celle dite seconde des deux faces opposées de la première partie constitutive de la pièce.

Au moins l'un desdits premier et second ensembles fonctionnels porte une troisième surface d'appui sur la troisième face cylindrique de la seconde partie fonctionnelle constitutive de la pièce en vue de son centrage sur l'axe de révolution.

L'un au moins desdits premier et second ensemble fonctionnel est mobile en translation sur la machine qui le porte, selon un axe sensiblement parallèle à l'axe de guidage en rotation, de manière telle que lesdits ensembles peuvent être placés :
- dans une configuration d'écartement qui permet l'insertion ou le dégagement de la pièce, et
- dans une configuration de rapprochement dans laquelle ils sont fermement maintenus en position de contact avec la pièce par leurs surfaces à cet effet.

La première surface et la seconde surface d'appui sont respectivement constituées sur un premier et un second élément rigide portés par le premier ensemble fonctionnel et le second ensemble fonctionnel.

L'un au moins desdits premier et second ensembles fonctionnels comprend un dispositif élastique qui :
- d'une part, porte le premier ou le second élément rigide sur lequel se trouve constituée la première ou la seconde surface d'appui et,
- d'autre part, assure,
   . une première fonction de guidage en translation de l'élément rigide selon l'axe de révolution et
   . une deuxième fonction de résistance élastique au recul dudit élément rigide lorsque le premier et le second ensemble fonctionnel sont amenés et maintenus dans la configuration de rapprochement, cela d'une manière telle que le premier ensemble et le second ensemble développent sur la pièce deux actions opposées suffisamment énergiques pour, lors de l'usinage, entraver tout glissement en rotation de la pièce sur les première et seconde surfaces entre lesquelles elle se trouve élastiquement pincée.

Classiquement le dispositif élastique met en oeuvre, d'une part, un alésage de guidage en translation de l'élément rigide dans une pièce du premier ou du second ensemble et, d'autre part, un ressort disposé contre une butée située dans l'alésage pour s'opposer au recul dudit élément rigide dans ledit alésage.

Même lorsqu'il est réalisé avec le plus grand soin et le plus haut degré de précision possible, le dispositif de guidage élastique du type précité induit un jeu radial qui affecte la précision globale de l'appareil de maintien.

Précisément, l'invention intéresse un dispositif élastique qui ne présente pas l'inconvénient précité.

L'invention intéresse particulièrement la fabrication de pièces fragiles, de taille réduite, telle des pièces destinées à des micro mécanismes, par exemple des micro mécanismes d'horlogerie.

Un résultat que l'invention vise à obtenir est un dispositif élastique qui permette de maintenir précisément une pièce du type précité, et ce, d'une part, avec une force contrôlée et, d'autre part, avec répétitivité.

A cet effet, l'invention a pour objet un dispositif élastique destiné à être incorporé dans un appareil de maintien élastique d'une pièce pour la réalisation d'au moins une opération d'usinage sur cette pièce, ladite pièce comportant un axe de révolution et au moins deux faces opposées dites première et seconde, sensiblement orthogonales à cet axe de révolution,
l'appareil devant réaliser à la fois un centrage de la pièce selon son axe de révolution et un maintien énergique de cette pièce par pincement entre ses faces opposées,
le dispositif élastique étant destiné à participer à la fonction de maintien élastique et tel que défini par la revendication 1. Les revendications dépendantes définissent des réalisations avantageuses de l'invention.

L'invention sera bien comprise à la lecture de la description ci-après faite à titre d'exemple non limitatif, en regard du dessin ci-annexé qui représente:
Figures 1 et 2 : vues latéralement, deux pièces qui peuvent être maintenues dans un appareil de maintien selon l'invention, la pièce de la figure 2 étant représentée partiellement arrachée,

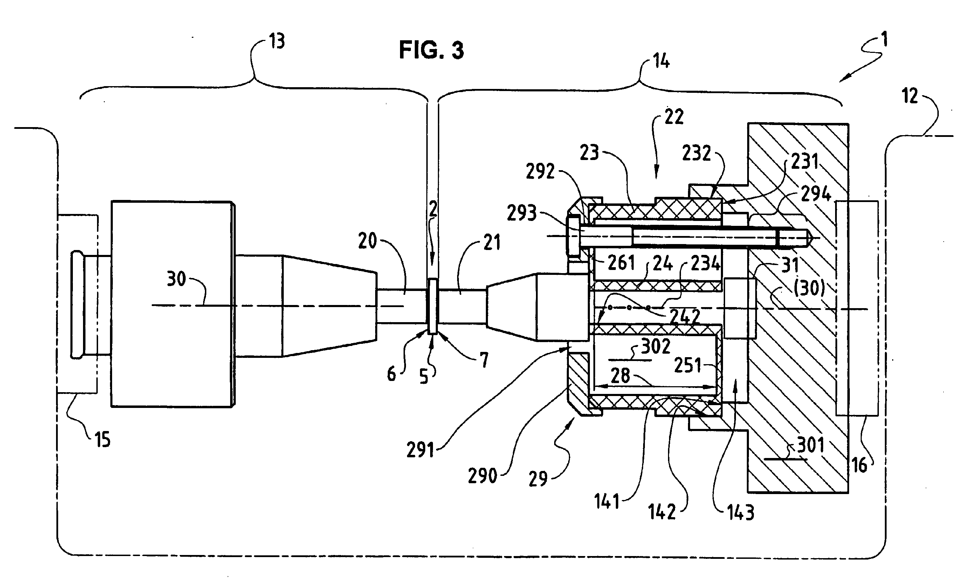

Figure 3 : vu en coupe longitudinale partielle, un appareil de maintien selon l'invention, dans une configuration qui permet le maintien de la pièce,
Figure 4 : vu latéralement, un détail de l'appareil de maintien de la figure 4, dans une configuration qui permet l'insertion ou le dégagement de la pièce,
Figure 5 : vu en perspective, un dispositif élastique destiné à équiper un appareil de maintien selon l'invention,
Figure 6 : le dispositif de la figure 7, vu de face,
Figure 7, une vue en coupe longitudinale du dispositif élastique de la figure 6.

En se reportant au dessin, on voit un appareil 1 de maintien élastique d'une pièce 2, telle une pièce d'horlogerie, comportant un axe de révolution 3 et comprenant :
- une première partie constitutive 4, telle une roue, dont le volume est déterminé par une face périphérique d'enveloppe 5 située radialement à une certaine distance de l'axe de révolution 3 et deux faces opposées 6, 7, dont une première (6) et une seconde (7), qui sont sécantes à l'axe de révolution 3, et
- au moins une seconde partie fonctionnelle constitutive 8 qui, coaxiale à ladite première partie constitutive 4, présente une troisième face cylindrique convexe 90 ou cylindrique concave 91 qui s'étend substantiellement selon l'axe de révolution 3 et détermine au moins l'une des parties que sont,
   . un arbre 10 qui, dans le cas d'une face cylindrique convexe 90, fait saillie sur au moins l'une des faces opposées 6, 7, et
   . un alésage 11 qui, dans le cas d'une face cylindrique concave 91, traverse au moins partiellement la pièce 2 entre ses deux faces opposées 6, 7.

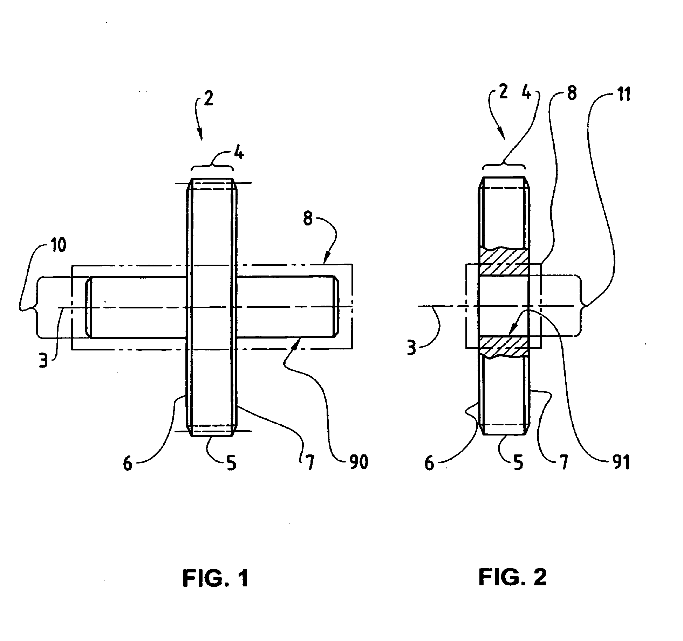

Pour la pièce 2 représentée en figure 1, on considèrera que l'arbre 10, s'étend de part et d'autre de la première partie constitutive 4 et présente donc une portion en saillie sur chacune des faces opposées 6, 7 de cette première partie constitutive 4.

De ce fait, on considèrera que la face cylindrique convexe 90, s'étend également de part et d'autre de la première partie constitutive 4, c'est à dire sur chacune des portions de l'arbre 10 qui se trouve en saillie sur chacune des faces opposées 6, 7 de la première partie constitutive 4.

L'appareil 1 équipe une machine d'usinage 12.

Bien que cela n'apparaisse pas sur les dessins, l'appareil 1 est destiné à maintenir élastiquement la pièce 2 pendant la réalisation d'au moins une opération d'usinage sur cette pièce 2, par exemple, la réalisation d'une denture au niveau de la face périphérique d'enveloppe 5 de la première partie constitutive 4 de cette pièce 2.

En effet, l'appareil 1 de maintien élastique comprend un premier ensemble fonctionnel 13 et un second ensemble fonctionnel 14 qui, sur la machine d'usinage 12, sont alignés sur un axe commun 30 et disposés en opposition pour :
- appliquer d'une action énergique contre chacune desdites première et seconde faces 6, 7 de la première partie constitutive 4 de la pièce 2, de manière à maintenir la pièce 2 par pincement entre ces faces opposées 6, 7,
- assurer le positionnement de l'axe de révolution 3 de la pièce 2 sur l'axe commun 30,
- guider et entraîner cette pièce 2 en rotation selon son axe commun 30,
ces ensembles fonctionnels 13 et 14 étant chacun destiné à être associé à un premier moyen 15 de guidage en rotation et un second moyen 16 de guidage en rotation qui sont prévus sur la machine d'usinage 12, pour assurer le guidage en rotation de ces ensembles fonctionnels 13, 14 selon l'axe commun 30.

Le premier ensemble fonctionnel 13, porte une première surface d'appui 17 contre celle dite première 6 des deux faces opposées 6, 7 de la première partie constitutive 4 de la pièce 2.

Le second ensemble fonctionnel 14 porte une seconde surface d'appui 18 contre celle dite seconde 7 des deux faces opposées 6, 7 de la première partie constitutive 4 de la pièce 2.

Au moins l'un desdits premier et second ensembles fonctionnels 13 et 14 porte une troisième surface d'appui 19 sur la troisième face cylindrique convexe 90 ou cylindrique concave 91 de la seconde partie fonctionnelle constitutive 8 de la pièce 2, en vue de son centrage sur l'axe commun 30.

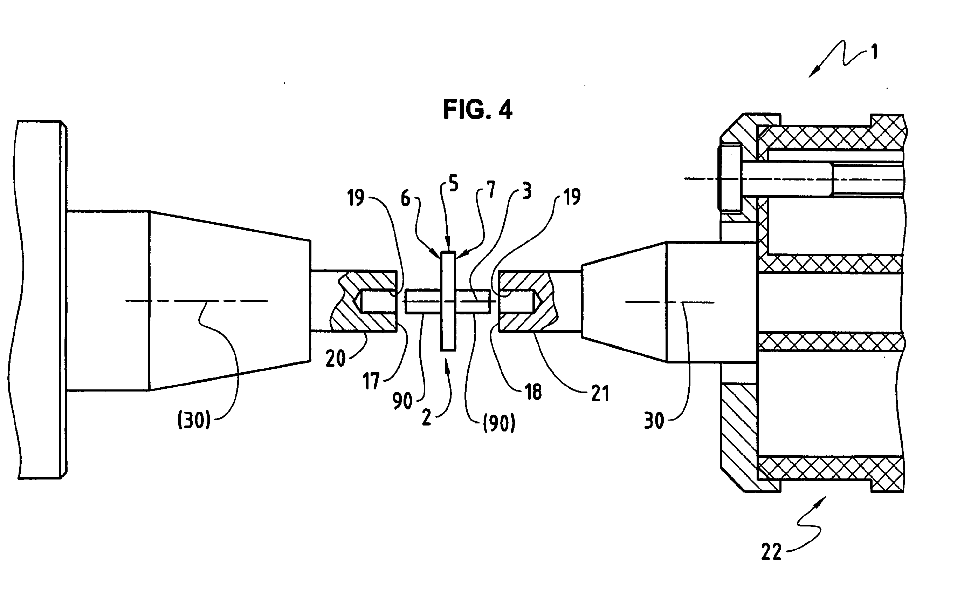

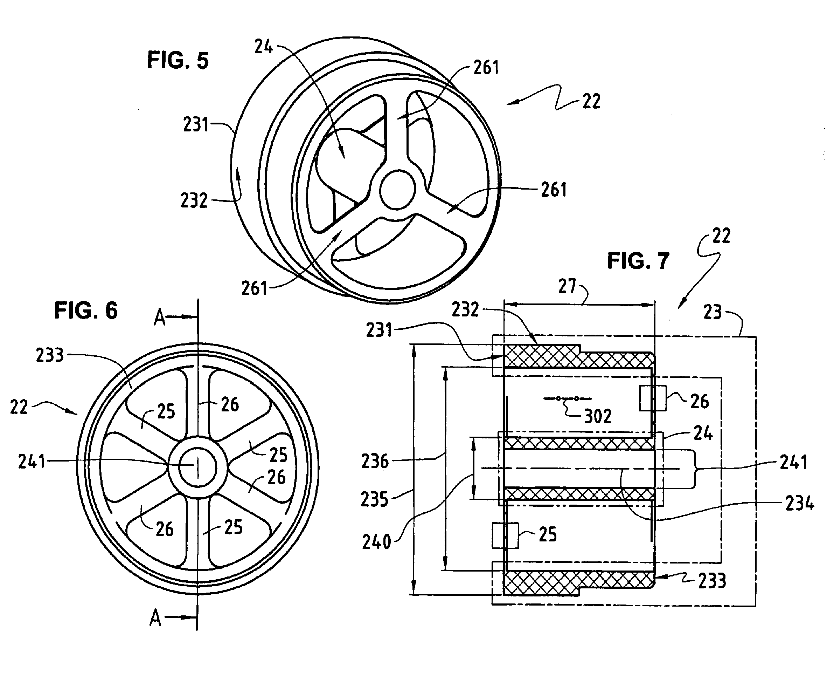

L'un au moins desdits premier et second ensembles fonctionnels 13 et 14 est mobile en translation sur la machine d'usinage 12 qui le porte, selon une première direction 301 sensiblement parallèle à l'axe commun 30, de manière telle que lesdits ensembles 13, 14 peuvent être placés :
- dans une configuration d'écartement (figure 4) qui permet l'insertion ou le dégagement de la pièce 2, et
- dans une configuration de rapprochement (figure 5) dans laquelle ils sont fermement maintenus en position de contact avec la pièce 2 par leurs surfaces 17 ou 18 à cet effet.

De préférence, la première surface et la seconde surface d'appui 17 ou 18 sont respectivement constituées sur un premier 20 et un second 21 élément rigide, l'un (20) que comporte le premier ensemble fonctionnel 13 et, l'autre (21) que comporte le second ensemble fonctionnel 14.

L'un au moins desdits premier et second ensembles fonctionnels 13, 14 comprend également un dispositif élastique 22 qui :
- d'une part, porte le premier (20) ou le second (21) élément rigide sur lequel se trouve constituée la première 17 ou la seconde surface d'appui 18 et,
- d'autre part, assure,
   . une première fonction de guidage en translation de l'élément rigide 20, 21 selon l'axe commun 30, et
   . une deuxième fonction de résistance élastique au recul dudit élément rigide 20, 21 lorsque le premier et le second ensemble fonctionnel 13, 14 sont amenés et maintenus dans la configuration de rapprochement, cela d'une manière telle que le premier ensemble 13 et le second ensemble 14 développent sur la pièce 2 deux actions élastiques opposées suffisamment énergiques pour, lors de l'usinage, entraver tout glissement en rotation de la pièce 2 sur les première et seconde surfaces 17 ou 18 entre lesquelles elle se trouve élastiquement pincée.

De manière notable, le dispositif élastique 22 comprend au moins trois parties solidaires 23 à 26 dont :
- une première partie fonctionnelle 23 rigide présentant,
   . une première portée 231 d'appui longitudinal sur l'un desdits premier ensemble 13 et second ensemble 14, de manière à assurer l'immobilisation en translation du dispositif élastique 22 sur cet ensemble 13, 14, selon l'axe commun 30,
   . une seconde portée 232 de centrage du dispositif élastique 22 sur ce même ensemble 13, 14 et sur l'axe commun 30,
- une seconde partie fonctionnelle 24 rigide qui, située sensiblement axialement au dispositif élastique 22, porte au moins indirectement,
   . l'une des dites première et seconde surfaces 17 ou 18 destinée à coopérer avec l'une desdites première et seconde faces 6, 7 opposées de la pièce 2,
   . la troisième surface 19 d'appui sur la face cylindrique convexe 90 ou cylindrique concave 91 de la seconde partie fonctionnelle constitutive 8 de la pièce 2 en vue de son centrage sur l'axe commun 30,
- une troisième partie fonctionnelle 25 élastiquement déformable dans une deuxième direction 302 parallèle à l'axe commun 30, ladite troisième partie fonctionnelle 25 étant interposée entre la première partie fonctionnelle 23 et la seconde partie fonctionnelle 24 de manière à assurer,
   . le guidage en translation de la seconde partie fonctionnelle 24 selon l'axe commun 30, et
   . une résistance élastique de valeur prédéterminée au déplacement en translation de la seconde partie fonctionnelle 24, selon l'axe commun 30.

De la lecture de ces premières caractéristiques techniques, on peut déduire que le dispositif élastique 22 ne comprend pas de partie fonctionnelle mobile coulissante qui impliquerait un quelconque jeu de fonctionnement.

De ce fait, le résultat essentiel visé par l'invention est atteint, à savoir, la pièce 2 est maintenue élastiquement, sans qu'un jeu radial résultant d'un guidage en translation ne soit impliqué.

De manière également remarquable :
- la seconde partie fonctionnelle 24 rigide est située concentriquement à la première partie fonctionnelle 23 rigide et ces parties fonctionnelles s'étendent dans selon la deuxième direction 302 de sorte que le dispositif élastique 22 présente une certaine épaisseur 27 mesurable au moins entre la première portée 231 et une face 233 opposée, dite face de maintien 233,
- en plus de la troisième partie fonctionnelle 25 élastiquement déformable, le dispositif élastique 22 comprend une quatrième partie fonctionnelle 26 élastiquement déformable dans la deuxième direction 302 parallèle à l'axe commun 30, et
- la troisième partie fonctionnelle 25 et la quatrième partie fonctionnelle 26 élastiquement déformables sont disposées avec un écartement prédéterminé 28 selon l'épaisseur 27 du dispositif élastique 22.

De manière encore remarquable, la troisième partie fonctionnelle 25 et la quatrième partie fonctionnelle 26 élastiquement déformables sont disposées, l'une sensiblement au niveau d'un premier plan tangent à la première portée 231 et l'autre sensiblement au niveau d'un second plan tangent à la face de maintien 233 opposée à ladite première portée 231.

Selon une forme préférée de réalisation :
- la première partie fonctionnelle 23 rigide consiste en une partie fonctionnelle sensiblement tubulaire de révolution, d'axe longitudinal 234, d'un premier diamètre extérieur 235, d'un diamètre intérieur 236 et dont la dimension selon l'axe longitudinal 234 est déterminée entre la première portée 231 et la face de maintien 233,
- la seconde partie fonctionnelle 24 rigide consiste en une partie fonctionnelle cylindrique qui, disposée à l'intérieur de la première partie fonctionnelle 23 rigide et selon l'axe longitudinal 234 de cette dernière, est d'un deuxième diamètre extérieur 240 notablement inférieur au diamètre intérieur 236 de la première partie fonctionnelle 23,
- la troisième partie fonctionnelle 25 élastique et la quatrième 26 partie fonctionnelle élastique consistent en des parois minces qui, s'étendant chacune radialement à l'axe longitudinal 234 de la première partie fonctionnelle 23 et entre la dite première partie fonctionnelle 23 et ladite seconde partie fonctionnelle 24, sont chacune élastiquement déformable selon la deuxième direction 302 parallèle à l'axe commun 30 de manière à assurer le guidage en translation de la seconde partie fonctionnelle 24 selon l'axe longitudinal 234 de la première partie fonctionnelle 23 et donc suivant l'axe commun 30.

Selon une première forme de réalisation au moins l'une desdites troisième partie fonctionnelle 25 et quatrième partie fonctionnelle 26 est constituée par une paroi mince qui s'étend dans un plan approximativement orthogonal à l'axe longitudinal 234 de la première partie fonctionnelle 23.

Le réglage de l'élasticité de la paroi mince qui constitue au moins l'une desdites troisième partie fonctionnelle 25 et quatrième partie fonctionnelle 26, s'effectue par le choix de l'épaisseur de ladite paroi.

L'homme du métier est à même de calculer l'épaisseur de la paroi mince précitée en fonction de l'élasticité recherchée pour cette paroi, et ce, en relation avec la nature du matériau qui constitue cette paroi.

Selon une deuxième forme de réalisation (figures 6 et 7) au moins l'une desdites troisième partie fonctionnelle 25 et quatrième partie fonctionnelle 26 est constituée par une pluralité de segments de paroi mince 261 qui s'étendent à la manière de rayons dans un plan approximativement orthogonal à l'axe longitudinal 234 de la première partie fonctionnelle 23.

Le réglage de l'élasticité de la pluralité de segments de paroi mince qui constituent au moins l'une desdites troisième partie fonctionnelle 25 et quatrième partie fonctionnelle 26, s'effectue par le choix des dimensions (épaisseur et largeur) de chacun de ces segments de paroi mince.

De préférence, mais non limitativement, les segments de paroi d'un même groupe d'une pluralité de segments, ont tous les mêmes dimensions.

L'homme du métier est à même de calculer les dimensions des segments de paroi mince précités en fonction de l'élasticité recherchée et ce, en relation avec la nature du matériau qui constitue ces segments de paroi mince.

De manière notable, la seconde partie fonctionnelle 24 comprend un alésage axial 241 qui, situé selon l'axe longitudinal 234 de la première partie fonctionnelle, constitue une troisième portée 242 destinée à la fixation d'un des éléments rigides 20, 21 que sont le premier élément rigide 20 et second élément rigide 21.

Par exemple, la fixation d'un des éléments rigides que sont le premier élément rigide 20 et second élément rigide 21 dans l'alésage axial 241 est effectuée par emboîtement à force.

Le dispositif élastique 22 peut être réalisé de différentes manières.

Par exemple, il peut être réalisé par usinage dans un bloc unique de matériau, ou réalisé par assemblage de plusieurs parties fonctionnelles.

De manière remarquable, le dispositif élastique 22 est, par un moyen de fixation 29, fermement maintenu avec ses première portée 231 et seconde portée 232 en appui contre des surfaces d'appui 141 et de centrage 142 présentées par sur celui (14) des ensembles fonctionnels 13, 14, dits premier et second, qui le porte.

Celui (14) des ensembles fonctionnels 13, 14, dits premier et second, qui porte le dispositif élastique 22 présente une dépression 143 qui permet le recul de la seconde partie fonctionnelle 24 du dispositif élastique 22, afin d'autoriser la déformation dudit dispositif élastique 22.

Par exemple, ce moyen de fixation 29 comprend une bride circulaire 290 qui s'appuie sur la face de maintien 233 du dispositif de fixation et comprend, d'une part, une découpe centrale 291 permettant le libre passage de celui desdits premier et second éléments d'appui rigide 20, 21 que porte le dispositif élastique 22 et, d'autre part, une pluralité de perforations 292 permettant le passage d'organes de fixation 293, tels des vis, vers des portées de fixation 294 réservées dans celui (14) des ensembles fonctionnels 13, 14, dits premier et second, qui porte ledit dispositif élastique 22.

Comme cela peut être déduit de la description qui précède, l'appareil de maintien comprenant le dispositif élastique 22 est du type comprenant un premier ensemble fonctionnel 13 et un second ensemble fonctionnel 14 qui, sur la machine d'usinage 12, sont alignés sur un axe commun 30 et disposés en opposition pour :
- appliquer d'une action énergique contre chacune desdites première et seconde faces 6, 7 de la première partie constitutive 4 de la pièce 2, de manière à maintenir la pièce 2 par pincement entre ces faces opposées 6, 7,
- assurer le positionnement de l'axe de révolution 3 de la pièce 2 sur l'axe commun 30,
- guider et entraîner cette pièce 2 en rotation selon son axe commun 30,
ces ensembles fonctionnels 13 et 14 étant chacun destiné à être associé à un premier moyen 15 de guidage en rotation et un second moyen 16 de guidage en rotation qui sont prévus sur la machine d'usinage 12, pour assurer le guidage en rotation de ces ensembles fonctionnels 13, 14 selon l'axe commun 30.

L'appareil de maintien est remarquable en ce qu'au moins l'un des premier ensemble 13 et second ensemble 14 comprend des surfaces d'appui 141 et de centrage 142 destinées à coopérer avec la première et la seconde portée 231, 232 du dispositif élastique 22.

L'appareil de maintien est aussi remarquable en ce qu'il comprend un moyen de fixation 29 du dispositif élastique 22, fermement maintenu avec ses première portée 231 et seconde portée 232 en appui contre des surfaces d'appui 141 et de centrage 142 présentées par sur celui (14) des ensembles fonctionnels 13, 14, dits premier et second, qui le porte.

L'appareil de maintien est encore remarquable en ce que celui des ensembles fonctionnels 13, 14 qui coopère avec le dispositif élastique 22 comprend un moyen 31 pour déterminer la valeur d'un déplacement imposé à la seconde partie fonctionnelle 24 selon l'axe commun 30.

Ce moyen 31 pour déterminer la valeur d'un déplacement imposé à la seconde partie fonctionnelle 24 selon l'axe commun 30 peut être de tout type connu, mais avantageusement il peut mettre en oeuvre un organe tensiométrique de mesure de déformations par variation de résistance électrique.

L'homme du métier est à même de déterminer le moyen le plus approprié pour constituer le moyen 31 pour déterminer la valeur d'un déplacement imposé à la seconde partie fonctionnelle 24 selon l'axe commun 30.

## Revendications

1. Dispositif élastique (22) destiné à être incorporé dans un appareil (1) de maintien élastique d'une pièce (2) pour la réalisation d'au moins une opération d'usinage sur cette pièce (2), ladite pièce (2) comportant un axe de révolution (3) et au moins deux faces opposées (6, 7), dites première et seconde, sensiblement orthogonales à cet axe de révolution (3),
l'appareil (1) devant réaliser à la fois un centrage de la pièce (2) selon son axe de révolution (3) et un maintien énergique de cette pièce (2) par pincement entre ses faces opposées (6, 7),
le dispositif élastique (22) étant destiné à participer à la fonction de maintien élastique et comprenant au moins trois parties solidaires (23 à 26) dont :
- une première partie fonctionnelle (23) rigide présentant,
.une première portée (231) d'appui longitudinal sur l'un des ensembles que sont un premier et un second ensemble (13, 14) que l'appareil (1) comporte, de manière à assurer l'immobilisation en translation du dispositif élastique (22) sur cet ensemble (13, 14), selon un axe commun (30) auxdits premier ensemble et second ensemble,
.une seconde portée (232) de centrage du dispositif élastique (22) sur l'ensemble (13, 14) qui le reçoit et sur l'axe commun (30) audits premier et second ensembles,
- une seconde partie fonctionnelle (24) rigide qui, située sensiblement axialement au dispositif élastique (22), est destinée à porteur au moins indirectement une surface (17 ou 18) quant à elle destinée à coopérer avec au moins l'une des faces opposées (6, 7) de la pièce (2),
- une troisième partie fonctionnelle (25) élastiquement déformable dans une direction (302) parallèle à l'axe commun (30), ladite troisième partie fonctionnelle (25) étant interposée entre la première partie fonctionnelle (23) et la seconde partie fonctionnelle (24) de manière à assurer,
. le guidage en translation de la seconde partie fonctionnelle (24) selon l'axe commun (30), et
. une résistance élastique de valeur prédéterminée au déplacement en translation de la seconde partie fonctionnelle (24), selon l'axe commun (30),
ce dispositif étant **caractérisé en ce que** :
- la seconde partie fonctionnelle (24) rigide est située concentriquement à la première partie fonctionnelle (23) rigide et ces parties fonctionnelles s'étendent dans la direction (302) parallèle à l'axe commun (30) de sorte que le dispositif élastique (22) présente une certaine épaisseur (27) mesurable au moins entre la première portée (231) et une face (233) opposée, dite face de maintien (233),
- en plus de la troisième partie fonctionnelle (25) élastiquement déformable, le dispositif élastique (22) comprend une quatrième partie fonctionnelle (26) élastiquement déformable dans la direction (302) parallèle à l'axe commun (30), et
- la troisième partie fonctionnelle (25) et la quatrième partie fonctionnelle (26) élastiquement déformables sont disposées avec un écartement prédéterminé (28) selon l'épaisseur (27) du dispositif élastique (22).

2. Dispositif selon la revendication 1 **caractérisé en ce que**
la troisième partie fonctionnelle (25) et la quatrième partie fonctionnelle (26) élastiquement déformables sont disposées, l'une sensiblement au niveau d'un premier plan tangent à la première portée (231) et l'autre sensiblement au niveau d'un second plan tangent à la face de maintien (233) opposée à ladite première portée (231).

3. Dispositif selon la revendication 2 **caractérisé en ce que** :
- la première partie fonctionnelle (23) rigide consiste en une partie fonctionnelle sensiblement tubulaire de révolution, d'axe longitudinal (234), d'un premier diamètre extérieur (235), d'un diamètre intérieur (236) et dont la dimension selon l'axe longitudinal (234) est déterminée entre la première portée (231) et la face de maintien opposée (233),
- la seconde partie fonctionnelle (24) rigide consiste en une partie fonctionnelle cylindrique qui, disposée à l'intérieur de la première partie fonctionnelle (23) rigide et selon l'axe longitudinal (234) de cette dernière, est d'un deuxième diamètre extérieur (240) notablement inférieur au diamètre intérieur (236) de la première partie fonctionnelle (23),
- la troisième partie fonctionnelle (25) élastique et la quatrième (26) partie fonctionnelle élastique consistent en des parois minces qui, s'étendant chacune radialement à l'axe longitudinal (234) de la première partie fonctionnelle (23) et entre la dite première partie fonctionnelle (23) et ladite seconde partie fonctionnelle (24), sont chacune élastiquement déformable selon la direction (302) parallèle à l'axe commun (30) de manière à assurer le guidage en translation de la seconde partie fonctionnelle (24) selon l'axe longitudinal (234) de la première partie fonctionnelle (23) et donc suivant l'axe commun (30).

4. Dispositif selon l'une quelconque des revendications 1 à 3 **caractérisé en ce qu'** au moins l'une desdites troisième partie fonctionnelle (25) et quatrième partie fonctionnelle (26) est constituée par une paroi mince qui s'étend dans un plan approximativement orthogonal à l'axe longitudinal (234) de la première partie fonctionnelle (23).

5. Dispositif selon l'une quelconque des revendications 1 à 3 **caractérisé en ce qu'** au moins l'une desdites troisième partie fonctionnelle (25) et quatrième partie fonctionnelle (26) est constituée par une pluralité de segments de paroi mince (261) qui s'étendent à la manière de rayons dans un plan approximativement orthogonal à l'axe longitudinal (234) de la première partie fonctionnelle (23).

6. Dispositif selon l'une quelconque des revendications 1 à 5 **caractérisé en ce que** la seconde partie fonctionnelle (24) comprend un alésage axial (241) qui, situé selon l'axe longitudinal (234) de la première partie fonctionnelle, constitue une troisième portée (242) destinée à la fixation d'un des éléments rigides (20, 21) que sont un premier élément rigide (20) et un second élément rigide (21), sur chacun desquels se trouve constituée une première (17) ou une seconde surface d'appui (18) contre l'une desdites première et seconde faces opposées (6, 7) de la pièce (2).

7. Dispositif selon l'une quelconque des revendications 1 à 6 **caractérisé en ce que** le dispositif élastique (22) est, par un moyen de fixation (29), capable d'être fermement maintenu avec ses première portée (231) et seconde portée (232) en appui contre des surfaces d'appui (141) et de centrage (142) présentées par sur celui (14) des ensembles fonctionnels (13, 14), dits premier et second, qui le porte.

## Claims

1. Elastic device (22) intended to be incorporated in an apparatus (1) for flexible holding of a workpiece (2) for the accomplishment of at least one machining operation on this workpiece (2), said workpiece (2) comprising an axis of rotation (3) and at least two opposite faces (6, 7), referred to as first and second, substantially orthogonal to this axis of rotation (3),
the apparatus (1) having to achieve at one and the same time a centring of the workpiece (2) along its axis of rotation (3) and a strong holding of this workpiece (2) by clamping between its opposite faces (6, 7),
the elastic device (22) being intended to participate in the function of flexible holding, and comprising at least three integral parts (23 to 26) which are:
- a rigid first functional part (23) having
• a first bearing surface (231) of longitudinal support on one of the assemblies which are a first and a second assembly (13, 14) which the apparatus (1) comprises, in a way so as to ensure the immobilisation in translation of the elastic device (22) on this assembly (13, 14), along a common axis (30) with respect to said first assembly and second assembly,
• a second bearing surface (232) for centring of the elastic device (22) on the assembly (13, 14) which receives it and on the common axis (30) with respect to said first and second assemblies,
- a rigid second functional part (24) which, situated substantially axially with respect to the elastic device (22), is intended to bear at least indirectly a surface (17 or 18) which is itself intended to co-operate with at least one of the opposite faces (6, 7) of the workpiece (2),
- a third functional part (25), elastically deformable in a direction (302) parallel to the common axis (30), said third functional part (25) being interposed between the first functional part (23) and the second functional part (24) in a way so as to ensure
• the guiding in translation of the second functional part (24) along the common axis (30), and
• an elastic resistance of predetermined value to the displacement in translation of the second functional part (24), along the common axis (30),
this device being **characterised in that**:
- the rigid second functional part (24) is situated concentrically with respect to the rigid first functional part (23), and these functional parts extend in the direction (302) parallel to the common axis (30) in such a way that the elastic device (22) has a certain measurable thickness (27) at least between the first bearing surface (231) and an opposite face (233), referred to as support face (233),
- in addition to the elastically deformable third functional part (25), the elastic device (22) comprises a fourth functional part (26) elastically deformable in the direction (302), parallel to the common axis (30), and
- the elastically deformable third functional part (25) and fourth functional part (26) are disposed with a predetermined spacing (28) according to the thickness (27) of the elastic device (22).

2. Device according to claim 1, **characterised in that**=
the elastically deformable third functional part (25) and fourth functional part (26) are disposed, the one substantially at the level of a first plane tangent to the first bearing surface (231) and the other substantially at the level of a second plane tangent to the support face (233) opposite said first bearing surface (231).

3. Device according to claim 2, **characterised in that**:
- the rigid first functional part (23) consists of a substantially rotationally tubular functional part, with longitudinal axis (234), with a first outer diameter (235), with an inner diameter (236), and of which the dimension along the longitudinal axis (234) is predetermined between the first bearing surface (231) and the opposite support face (233),
- the rigid second functional part (24) consists of a cylindrical functional part which, disposed inside the rigid first functional part (23) and along the longitudinal axis (234) of the latter, is of a second outer diameter (240) notably less than the inner diameter (236) of the first functional part (23),
- the elastic third functional part (25) and the elastic fourth functional part (26) consist of thin walls which, each extending radially with respect to the longitudinal axis (234) of the first functional part (23) and between said first functional part (23) and said second functional part (24), are each elastically deformable in the direction (302) parallel to the common axis (30) in such a way as to ensure the guiding in translation of the second functional part (24) along the longitudinal axis (234) of the first functional part (23) and thus following the common axis (30).

4. Device according to any one of the claims 1 to 3, **characterised in that** at least one of said third functional part (25) and fourth functional part (26) is made up of a thin wall which extends in a plane approximately orthogonal with respect to the longitudinal axis (234) of the first functional part (23).

5. Device according to any one of the claims 1 to 3, **characterised in that** at least one of said third functional part (25) and fourth functional part (26) is made up of a plurality of segments of thin wall (261) which extend in the manner of rays or spokes in a plane approximately orthogonal with respect to the longitudinal axis (234) of the first functional part (23).

6. Device according to any one of the claims 1 to 5, **characterised in that** the second functional part (24) comprises an axial bore (241) which, situated along the longitudinal axis (234) of the first functional part, constitutes a third bearing surface (242) intended for the fixing of one of the rigid elements (20, 21) which are a first rigid element (20) and a second rigid element (21), on each of which a first (17) or a second support surface (18) is formed against one of said first and second opposite faces (6, 7) of the workpiece (2).

7. Device according to any one of the claims 1 to 6, **characterised in that** the elastic device (22) is capable, through a fixing means (29), of being firmly held by its first bearing surface (231) and second bearing surface (232) in abutment against surfaces for support (141) and centring (142) provided by on <sic.> the one (14) of the functional assemblies (13, 14), referred to as first and second, which bears it.

## Patentansprüche

1. Elastische Vorrichtung (22), die dazu vorgesehen ist, in ein elastisches Stützgerät (1) eines Werkstücks (2) eingebaut zu werden, um mindestens einen Bearbeitungsvorgang auf diesem Werkstück durchzuführen, wobei das Werkstück (2) eine Drehachse (3) und mindestes zwei gegenüberliegende Seiten (6, 7), genannt erste und zweite Seite, aufweist, die im Wesentlichen rechtwinklig zu dieser Drehachse (3) liegen,
wobei das Gerät (1) gleichzeitig eine Zentrierung des Werkstücks (2) gemäß seiner Drehachse (3) und eine kräftige Stütze dieses Werkstücks (2) durch Einklemmen zwischen seinen gegenüberliegenden Seiten (6, 7) durchführen muss,
wobei die elastische Vorrichtung (22) dazu vorgesehen ist, an der elastischen Stützfunktion teilzunehmen und mindestens drei fest verbundene Teile (23 bis 26) umfasst, darunter:
- einen ersten starren funktionellen Teil (23), der Folgendes aufweist:
. einen ersten länglichen Bereich (231) zur Auflage auf einer der Anordnungen, d.h. einer ersten und einer zweiten Anordnung (13, 14), die das Gerät (1) umfasst, um die Immobilisierung bei der Übertragung der elastischen Vorrichtung (22) auf diese Anordnung (13, 14) gemäß einer gemeinsamen Achse (30) der ersten Anordnung und der zweiten Anordnung sicherzustellen,
. einen zweiten Bereich (232) zur Zentrierung der elastischen Vorrichtung (22) auf der Anordnung (13, 14), die sie aufnimmt, und auf der gemeinsamen Achse (30) der ersten und der zweiten Anordnung,
- einen zweiten starren funktionellen Teil (24), der, im Wesentlichen axial zur elastischen Vorrichtung angebracht, dazu vorgesehen ist, mindestens indirekt eine Fläche (17 oder 18) zu tragen, die ihrerseits dazu vorgesehen ist, mit mindestens einer der gegenüberliegenden Seiten (6, 7) des Werkstücks (2) zusammenzuarbeiten,
- einen dritten elastisch verformbaren funktionellen Teil (25) in einer Richtung (302) parallel zur gemeinsamen Achse (30), wobei der dritte funktionelle Teil (25) so zwischen den ersten funktionellen Teil (23) und den zweiten funktionellen Teil (24) gestellt ist, dass er Folgendes sicherstellt:
. die Führung bei der Übertragung des zweiten funktionellen Teils (24) entlang der gemeinsamen Achse (30), und
. einen elastischen Widerstand mit einem vorbestimmten Wert gegen die Verschiebung bei der Übertragung des zweiten funktionellen Teils (24) entlang der gemeinsamen Achse (30),
wobei diese Vorrichtung **dadurch gekennzeichnet ist, dass**:
- der zweite starre funktionelle Teil (24) konzentrisch zum ersten starren funktionellen Teil (23) angeordnet ist, und diese funktionellen Teile sich in die Richtung (302) parallel zur gemeinsamen Achse (30) erstrecken, sodass die elastische Vorrichtung (22) eine bestimmte Dicke (27) aufweist, die mindestens zwischen dem ersten Bereich (231) und einer gegenüberliegenden Seite (233), genannt Stützseite (233), messbar ist,
- außer dem dritten elastisch verformbaren funktionellen Teil (25) die elastische Vorrichtung (22) einen vierten elastisch verformbaren funktionellen Teil (26) in der Richtung (302) parallel zur gemeinsamen Achse (30) umfasst, und,
- der dritte (25) und der vierte (26) elastisch verformbare funktionelle Teil mit einer vorbestimmten Beabstandung (28) gemäß der Dicke (27) der elastischen Vorrichtung (22) angebracht sind.

2. Vorrichtung nach Anspruch 1, **dadurch gekennzeichnet, dass**
der dritte (25) und der vierte (26) elastisch verformbare funktionelle Teil zum einen im Wesentlichen auf dem Niveau einer ersten Fläche, die den ersten Bereich (231) berührt, und zum anderen im Wesentlichen auf dem Niveau einer zweiten Fläche, die die Stützseite (233) gegenüber dem ersten Bereich (231) berührt, angebracht sind.

3. Vorrichtung nach Anspruch 2, **dadurch gekennzeichnet, dass**
- der erste starre funktionelle Teil (23) einen im Wesentlichen rohrförmigen funktionellen Drehteil mit einer Längsachse (234), einem ersten Außendurchmesser (235), einen Innendurchmesser (236) umfasst, und dessen Abmessung entlang der Längsachse (234) zwischen dem ersten Bereich (231) und der gegenüberliegenden Stützseite (233) festgelegt ist,
- der zweite starre funktionelle Teil (24) einen zylindrischen funktionellen Teil umfasst, der, angebracht im Inneren des ersten starren funktionellen Teils (23) und entlang der Längsachse (234) des Letzteren, einen zweiten Außendurchmesser (240) aufweist, der beträchtlich geringer als der Innendurchmesser (236) des ersten funktionellen Teils (23) ist,
- der dritte elastische funktionelle Teil (25) und der vierte (26) elastische funktionelle Teil (26) dünne Wände umfassen, die, indem sie sich jeweils radial zur Längsachse (234) des ersten funktionellen Teils (23) und zwischen dem ersten funktionellen Teil (23) und dem zweiten funktionellen Teil (24) erstrecken, jeweils entlang der Richtung (302) parallel zur gemeinsamen Achse (30) elastisch verformbar sind, um die Führung bei der Übertragung des zweiten funktionellen Teils (24) entlang der Längsachse (234) des ersten funktionellen Teils (23) und somit entlang der gemeinsamen Achse (30) sicherzustellen.

4. Vorrichtung nach einem der Ansprüche 1 bis 3, **dadurch gekennzeichnet, dass** mindestens entweder der dritte funktionelle Teil (25) oder der vierte funktionelle Teil (26) eine dünne Wand umfasst, die sich auf einer Fläche, annährend rechtwinklig zur Längsachse (234) des ersten funktionellen Teils (23), erstreckt.

5. Vorrichtung nach einem der Ansprüche 1 bis 3, **dadurch gekennzeichnet, dass** mindestens entweder der dritte funktionelle Teil (25) oder der vierte funktionelle Teil (26) eine Vielzahl von Abschnitten mit einer dünnen Wand (261) umfasst, die sich wie Speichen auf einer Fläche, annähernd rechtwinklig zur Längsachse (234) des ersten funktionellen Teils (23), erstrecken.

6. Vorrichtung nach einem der Ansprüche 1 bis 5, **dadurch gekennzeichnet, dass** der zweite funktionelle Teil (24) eine axiale Bohrung (241) umfasst, die, angeordnet entlang der Längsachse (234) des ersten funktionellen Teils, einen dritten Bereich (242) bildet, der zur Befestigung eines der starren Elemente (20, 21) vorgesehen ist, d.h. eines ersten starren Elementes (20) und eines zweiten starren Elementes (21), wobei auf jedem dieser eine erste (17) oder eine zweite Auflagefläche (18) gegen die erste oder die zweite gegenüberliegende Seite (6, 7) des Werkstücks (2) gebildet ist.

7. Vorrichtung nach einem der Ansprüche 1 bis 6, **dadurch gekennzeichnet, dass** die elastische Vorrichtung (22) durch ein Befestigungsmittel (29) dazu in der Lage ist, mit ihrem ersten Bereich (231) und ihrem zweiten Bereich (232), aufliegend gegen Auflage-(141) und Zentrierflächen (142), fest gestützt zu werden, die auf derjenigen (14) der funktionellen Anordnungen (13, 14), genannt erste und zweite Anordnung, die sie trägt, dargestellt werden.
